# EUROPÄISCHE PATENTSCHRIFT

(11) **EP 1 820 759 B1**
(45) Veröffentlichungstag und Bekanntmachung des Hinweises auf die Patenterteilung: **19.08.2009**
(21) Anmeldenummer: 07002897.2
(22) Anmeldetag: 12.02.2007
(51) Int. Cl.: B65G 69/00

(54) **Gleitschuh und Positioner - und Blockiereinrichtung für Nutzfahrzeuge**
Shoe and positioning and blocking unit for commercial vehicles
Patin de guidage et dispositif de positionnement et de blocage pour véhicules utilitaires

(30) Priorität: 17.02.2006 DE 202006002919 U
(43) Veröffentlichungstag der Anmeldung: 22.08.2007
(73) Patentinhaber: Alfred Arnold eingetragener Kaufmann Verladesysteme, 70469 Stuttgart (DE)
(72) Erfinder: Arnold, Alfred, 70469 Stuttgart (DE); Arnold, Annette, 70469 Stuttgart (DE)
(74) Vertreter: Wilhelm, Martin

(56) Entgegenhaltungen:
- AU-B- 474 696
- FR-A- 2 203 764
- US-A1- 2005 196 255

## Beschreibung

Die Erfindung betrifft einen Gleitschuh für eine Positioniereinrichtung für Nutzfahrzeuge, wobei der Gleitschuh für ein Zusammenwirken mit wenigstens einer fahrbahnseitigen Führungsrampe zum Positionieren des Nutzfahrzeugs wenigstens in Fahrzeugquerrichtung und/oder Fahrzeughochrichtung ausgebildet ist.

Eine Positioniereinrichtung für Nutzfahrzeuge ist aus dem deutschen Gebrauchsmuster DE 202 20 749 U1 bekannt. Das in Fahrtrichtung hintere Ende eines Nutzfahrzeuges wird dort mit zwei Gleitschuhen versehen, die am rechten bzw. linken Längsträger angeordnet sind und sich nach unten, in Richtung auf die Fahrbahn erstrecken. Beim rückwärts Einparken des Nutzfahrzeugs greifen diese Gleitschuhe an einer fahrbahnseitigen Führungsrampe an und positionieren dadurch das in Fahrtrichtung hintere Ende des Nutzfahrzeugs beim Heranfahren an eine Laderampe in Fahrzeughochrichtung und Fahrzeugquerrichtung. Hierbei gleiten die Gleitschuhe entlang der Führungsrampe. Sobald eine Endposition des Nutzfahrzeugs unmittelbar vor der Laderampe erreicht ist, greifen Blockierhaken an den Gleitschuhen an, um das Nutzfahrzeug während des Entladevorgangs sicher in seiner Endstellung zu halten. Die Gleitschuhe weisen eine Führungsfläche auf, die als offene räumliche Ecke mit einer Bodenplatte und zwei im rechten Winkel zueinander stehenden Seitenwänden ausgebildet ist. Die Übergänge zwischen den Seitenwänden und zwischen den Seitenwänden und der Bodenplatte sind abgerundet ausgeführt. Die Bodenplatte ist mittels einer Trägerkonstruktion aus Plattenmaterial mit dem jeweiligen Längsträger verbunden.

Ein Gleitschuh für Positioniereinrichtung für Nutzfahrzeuge gemäß dem Oberbegriff des Anspruchs 1 ist bereits aus AU 474 696B bekannt. Aus der australischen Patentschrift AU 474 696 B ist eine Positioniereinrichtung für Nutzfahrzeuge bekannt, die eine fahrbahnseitige Führungsrampe aufweist, mit der das Heck eines Nutzfahrzeugs angehoben, also in Fahrzeughochrichtung positioniert werden kann. Am Heck des Fahrzeugs ist hierzu an den Ausfallenden der Längsträger eine breite Rolle angebracht. Alternativ kann an beiden Ausfallenden des Rahmens des Nutzfahrzeugs jeweils eine schmale Rolle angeordnet sein. Es ist auch vorgesehen, die beiden Einzelrollen durch Gleitkufen oder Gleitstücke zu ersetzen.

Aus der US-Offenlegungsschrift US 2005/0196 255 A1 ist eine weitere Positioniereinrichtung für Nutzfahrzeuge bekannt, mit der das Heck eines Nutzfahrzeugs angehoben werden kann. Am Heck des Nutzfahrzeugs ist hierzu ein stabiler Querbügel angebracht. Dieser Querbügel kann mittels einer Hubeinrichtung angehoben und abgesenkt werden. Die Hubeinrichtung weist eine schräg angeordnete Auflaufschiene auf, auf die der Querbalken am Nutzfahrzeug aufläuft und mittels der dann die Hubeinrichtung so weit hinuntergedrückt werden kann, dass der Querbalken oberhalb der Hubeinrichtung angeordnet werden kann. Sobald der Querbalken auf einer waagerechten Auflagefläche der Hubeinrichtung angeordnet ist, kann diese den Querbalken einschließlich des Hecks des Nutzfahrzeugs anheben. Die Auflagefläche ist mit einem Aretierhaken versehen, der dann an dem Querbalken angreift, wenn versucht wird, das Nutzfahrzeug von der Laderampe zu entfernen.

Aus der französischen Offenlegungsschrift FR 2 203 764 ist eine weitere Positioniereinrichtung für Nutzfahrzeuge bekannt, die für sogenannte Shuttle-Fahrzeuge vorgesehen ist. Hierbei wird eine horizontal angeordnete Rolle am Heck des Nutzfahrzeugs in eine sich verengende Öffnung zwischen zwei Führungsrampen eingeführt, um die Ladefläche des Nutzfahrzeugs auf exakt die gleiche Höhe wie eine Laderampe zu bringen. Die Ladefläche des Nutzfahrzeugs und die Laderampe sind jeweils mit Rollen versehen, um die komplette Ladung in einfacher Weise und automatisiert ent- bzw. einladen zu können.

Mit der Erfindung soll ein Gleitschuh und eine Positioniereinrichtung für Nutzfahrzeuge geschaffen werden, die stabil, leicht und kostengünstig herstellbar sind.

Erfindungsgemäß ist hierzu ein Gleitschuh für eine Positioniereinrichtung für Nutzfahrzeuge vorgesehen, wobei der Gleitschuh für ein Zusammenwirken mit wenigstens einer fahrbahnseitigen Führungsrampe zum Positionieren des Nutzfahrzeugs wenigstens in Fahrzeugquerrichtung und/oder Fahrzeughochrichtung ausgebildet ist, bei dem der Gleitschuh eine hohle, insbesondere rohrartige Form mit wenigstens einer geschlossenen Stirnseite aufweist, wobei die geschlossene Stirnseite wenigstens abschnittsweise eine mit der fahrbahnseitigen Führungsrampe zusammenwirkende Führungsfläche bildet.

Durch eine hohle Form des Gleitschuhs kann dieser in Leichtbauweise und gleichzeitig sehr stabil ausgeführt werden. Durch die hohle, speziell rohrartige Form ist der Gleitschuh gut für die Übertragung von Stützkräften geeignet, die durch das Aufliegen des Nutzfahrzeugs mittels des Gleitschuhs oder der Gleitschuhe auf der fahrbahnseitigen Führungsrampe entstehen. Gleichzeitig ist der Gleitschuh durch die rohrartige Form aber auch sehr gut für die Übertragung von seitlichen Schubkräften geeignet, die beim Positionieren des Nutzfahrzeugs in Fahrzeugquerrichtung entstehen, wenn der Gleitschuh oder die Gleitschuhe an seitlichen Führungskanten der fahrbahnseitigen Führungsrampe anlaufen.

In Weiterbildung der Erfindung weist der rohrartige Gleitschuh eine im Querschnitt rechteckartige Form auf.

Zweckmäßigerweise ist die längere Seite der rechteckartigen Form parallel zur Fahrtrichtung ausgerichtet, so dass der Gleitschuh beim Entlangfahren auf der fahrbahnseitigen Führungsrampe in Querrichtung gut geführt werden kann. In Fahrzeugquerrichtung kann der Gleitschuh hingegen platzsparend ausgebildet werden und wird vorzugsweise im Wesentlichen so breit wie ein Längsträger des Nutzfahrzeugs ausgebildet.

In Weiterbildung der Erfindung ist wenigstens eine im Wesentlichen senkrecht zur geschlossenen Stirnseite angeordnete Seitenwand des rohrartigen Gleitschuhs mit wenigstens einer Durchgangsöffnung versehen. Die Durchgangsöffnung weist vorteilhafterweise eine ovale oder elliptische Form auf.

Das Vorsehen von Durchgangsöffnungen ermöglicht eine Materialeinsparung in niedriger belasteten Bereichen im Sinne von Erleichterungsbohrungen. Eine ovale oder elliptische Form der Durchgangsöffnungen kann diesen Erleichterungseffekt maximieren und dennoch eine gleichmäßige Spannungsverteilung im Belastungsfall sicherstellen.

In Weiterbildung der Erfindung ist eine Berandung der Durchgangsöffnung mit einem im Wesentlichen senkrecht zur jeweiligen Seitenwand angeordneten umlaufenden Kragen versehen.

Ein solcher umlaufender Kragen erstreckt sich insbesondere in den Querschnitt hinein und dient zur Versteifung der jeweiligen Seitenwand.

Auf diese Weise kann der Gleitschuh speziell für die Übertragung von Seitenkräften zur Positionierung des Nutzfahrzeugs in Querrichtung, aber auch zur Übertragung von Kräften in Fahrzeuglängsrichtung, beispielsweise beim Anschlagen an einen Anschlag, sehr steif ausgebildet werden.

In Weiterbildung der Erfindung sind Übergänge der geschlossenen Stirnseite zu wenigstens zwei Seitenwänden abgerundet ausgebildet.

Dadurch ist ein gutes Entlanggleiten der Gleitschuhe an senkrechten Führungsschienen der Rampen auch dann möglich, wenn der Gleitschuh mit einer Ecke auf solche senkrechten Führungsschienen trifft. Vorteilhafterweise sind die Übergänge der Stirnseite zu drei Seitenwänden hin abgerundet und auch die Übergänge von wenigstens drei Seitenwänden zueinander sind abgerundet ausgebildet. Auf diese Weise kann dieselbe Gleitschuhform als rechter und linker Gleitschuh verwendet werden. Durch eine solche Verwendung von Gleichteilen sinken die Herstellungskosten.

In Weiterbildung der Erfindung weist ein der geschlossenen Stirnseite gegenüberliegendes Ende des Gleitschuhs einen Befestigungsflansch zur Befestigung an einem Längsträger des Nutzfahrzeugs auf.

Mittels eines solchen Befestigungsflansches kann eine große Anlagefläche für eine großflächige Krafteinleitung in den Längsträger geschaffen werden. Gegebenenfalls können zusätzlich Adapterstücke zur Stabilisierung des Längsträgerprofils und zur Anpassung des Befestigungsflansches an verschiedenartige Längsträger vorgesehen werden. Die Befestigung des Gleitschuhs erfolgt dann mittels Schraubbolzen am Längsträger oder an den Adapterstücken, die wiederum selbst mit den Längsträgern verbunden sind. Alternativ kann der Befestigungsflansch in Klemmtaschen eines Adapterstücks eingeschoben werden und dort eingeklemmt und/oder verrastet werden.

In Weiterbildung der Erfindung ist in einer, im Einbauzustand in Bezug auf das Nutzfahrzeug nach innen gerichteten Seitenwand des Gleitschuhs eine Einstecköffnung für einen Querträger vorgesehen.

Auf diese Weise kann ein Querträger, der zur Verbindung eines linken und eines rechten Gleitschuhs vorgesehen ist, in einfacher Weise in den Gleitschuh eingesteckt werden. Ein solcher Querträger kann Kräfte in Fahrzeugquerrichtung, die auf die Gleitschuhe wirken, auf den jeweils gegenüberliegenden Gleitschuh übertragen und dadurch eine gleichmäßigere Krafteinleitung in die Längsträger des Nutzfahrzeugs bewirken. Dies ist insbesondere bei der Positionierung des Nutzfahrzeugs in Querrichtung von Bedeutung, wenn also einer der Gleitschuhe an einen senkrechten Abschnitt der Führungsrampe anläuft, um dadurch das Nutzfahrzeug in Querrichtung zu positionieren. Die Einstecköffnung ist vorzugsweise mittig angeordnet, wie auch der gesamte Gleitschuh spiegelsymmetrisch aufgebaut ist, so dass dieselbe Gleitschuhform am rechten und linken Längsträger des Nutzfahrzeugs verwendet werden kann.

In Weiterbildung der Erfindung weist die Seitenwand im Bereich der Einstecköffnung eine erhöhte Wanddicke auf.

Diese Maßnahmen dienen zur Versteifung des Querträgers und zur besseren Führung des Querträgers. Vom Querträger auf die Gleitschuhe und umgekehrt übertragene Kräfte können dadurch jeweils gleichmäßig eingeleitet werden und lokale Spannungsmaxima werden vermieden. Die Einstecköffnung ist vorzugsweise am Übergang der geschlossenen Stirnseite zur jeweils inneren Seitenwand angeordnet, so dass der Querträger einerseits auf der Innenseite der geschlossenen Stirnseite und andererseits an der Innenwandung der Einstecköffnung anliegt. Der Querträger kann dann mittels geeigneter Vorrichtungen im Gleitschuh verrastet werden, so dass eine werkzeuglose Montage möglich ist.

In Weiterbildung der Erfindung ist die Einstecköffnung schlitzartige ausgebildet, die sich im Einbauzustand parallel zur Längsrichtung des Nutzfahrzeugs erstreckt.

Die Einstecköffnung ist damit für das Einstecken eines plattenartigen Querträgers ausgebildet und bietet bereits durch einfaches Einstecken einen stabilen Halt des Querträgers.

In Weiterbildung der Erfindung ist der Gleitschuh als Gussteil aus zähem Gusswerkstoff ausgebildet.

Auf diese Weise können die erfindungsgemäßen Gleitschuhe kostengünstig in größerer Stückzahl hergestellt werden. Überraschenderweise hat sich gezeigt, dass trotz der extrem hohen und stoßartigen Belastungen der erfindungsgemäßen Gleitschuhe eine Herstellung als Gussteil möglich ist. Der zu verwendende zähe Gusswerkstoff kann gegebenenfalls thermisch nachbehandelt werden. Erfindungsgemäß sind die Gleitschuhe spiegelsymmetrisch ausgebildet, so dass dieselbe Gleitschuhform als rechter und linker Gleitschuh verwendet werden kann. Dies ist insbesondere bei einer Herstellung als Gussteil vorteilhaft.

In Weiterbildung der Erfindung ist das Gussteil wenigstens im Bereich der Führungsfläche zur Erzielung besserer Gleiteigenschaften nachbehandelt, insbesondere verdichtet.

Eine solche Nachverdichtung kann während des Herstellungsprozesses oder sogar während des Betriebs erfolgen und verbessert die Gleiteigenschaften zwischen Gleitschuh und Führungsrampe und dadurch die an den Gleitschuhen angreifenden Kräfte beim Positionieren eines Nutzfahrzeugs.

Das der Erfindung zugrundeliegende Problem wird auch durch eine Positioniereinrichtung für Nutzfahrzeuge mit wenigstens zwei erfindungsgemäßen Gleitschuhen gelöst, bei der eine die beiden Gleitschuhe verbindende Querstrebe vorgesehen ist.

Eine solche Positioniereinrichtung kann im hinteren Bereich eines Nutzfahrzeugs, insbesondere eines Sattelaufliegers, befestigt werden, wobei jeweils ein Gleitschuh am rechten bzw. linken Längsträger befestigt wird. Der Querträger verteilt dann die an den Gleitschuhen angreifenden Kräfte beim Positionieren des Nutzfahrzeugs auf die beiden Längsträger, so dass eine übermäßige unsymmetrische Belastung der Längsträger vermieden werden kann.

In Weiterbildung der Erfindung ist der Querträger plattenartig ausgebildet und im Wesentlichen parallel zu einer Fahrbahn angeordnet.

Auf diese Weise können Seitenführungskräfte zwischen den Gleitschuhen gut aufgenommen und übertragen werden. Darüber hinaus können Blockierkräfte, die an dem Querträger angreifen können, gut aufgenommen werden. Dennoch wird ein geringes Gewicht des Querträgers erreicht. Der Querträger ist vorteilhafterweise aus einer Stahlplatte ausgeschnitten und damit gut für die Übertragung von Zugkräften und Scherkräften geeignet.

In Weiterbildung der Erfindung ist der Querträger mit wenigstens einem fahrzeugseitigen Kupplungsteil zum Eingreifen in einen fahrbahn- oder gebäudeseitigen zweiten Kupplungsteil einer Blockiervorrichtung versehen.

Auf diese Weise kann das Kupplungsteil gut zugänglich unterhalb den Längsträgern des Nutzfahrzeugs angeordnet werden und die am Kupplungsteil angreifenden Blockierkräfte werden gleichmäßig auf die Längsträger verteilt.

In Weiterbildung der Erfindung ist eine, dem ersten Kupplungsteil gegenüberliegende Kante des plattenartigen Querträgers nach außen, in Vorwärtsfahrtrichtung des Nutzfahrzeugs gekrümmt.

Auf diese Weise führen an dem ersten Kupplungsteil wirkende Zugkräfte entgegen der Vorwärtsfahrtrichtung des Nutzfahrzeugs zu Druckkräften in der nach außen gekrümmten Kante der plattenartigen Querstrebe und können dadurch von der Querstrebe gut aufgenommen werden, ohne dass diese übermäßig verformt wird. Trotzdem die plattenartige Querstrebe vergleichsweise dünn ausgebildet werden kann, können dadurch auch erhebliche Zugkräfte, die entstehen können, wenn versucht wird, das Nutzfahrzeug bei geschlossener Kupplungseinrichtung von einer Laderampe wegzufahren, gut aufgenommen und gleichmäßig in die Längsträger des Nutzfahrzeugs eingeleitet werden.

In Weiterbildung der Erfindung ist der erste Kupplungsteil als Kupplungsöse ausgebildet und für den Eingriff in eine fahrbahn- oder gebäudeseitige maulartige Kupplung ausgebildet.

Mittels einer Kupplung aus einem fahrbahn- oder gebäudeseitigen maulartigen Kupplungsteil und einer Kupplungsöse an dem Querträger wird eine verlässliche Blockierung des Nutzfahrzeugs beim Entladevorgang erreicht und dennoch hält sich das Mehrgewicht am Nutzfahrzeug in Grenzen, da am Nutzfahrzeug, insbesondere einem Sattelauflieger, lediglich die vergleichsweise leichte Kupplungsöse befestigt werden muss.

In Weiterbildung der Erfindung weist der Querträger wenigstens eine Sollbruchstelle auf.

Dadurch können bei übermäßiger Zugbelastung am Querträger Beschädigungen der Längsträger des Nutzfahrzeugs vermieden werden.

Weitere Merkmale und Vorteile der Erfindung ergeben sich aus den Ansprüche und der nachfolgenden Beschreibung einer bevorzugten Ausführungsform der Erfindung im Zusammenhang mit den Zeichnungen. In den Zeichnungen zeigen:
- Fig. 1: eine perspektivische Ansicht von schräg unten einer erfindungsgemäßen Positioniereinrichtung im montierten Zustand an zwei Längsträgern eines Nutzfahrzeugs,
- Fig. 2: eine Ansicht der Positioniereinrichtung der Fig. 1 von vorne, entgegen einer Vorwärtsfahrtrichtung des Nutzfahrzeugs,
- Fig. 3: eine perspektivische Ansicht von schräg oben eines Gleitschuhs der Positioniereinrichtung der Fig. 1,
- Fig. 4: eine Seitenansicht des Gleitschuhs der Fig. 3 von einer Außenseite,
- Fig. 5: eine Seitenansicht des Gleitschuhs der Fig. 3 von einer Innenseite,
- Fig. 6: eine Ansicht des Gleitschuhs der Fig. 3 von vorne,
- Fig. 7: eine Ansicht des Gleitschuhs der Fig. 3 von unten,
- Fig. 8: eine Ansicht des Gleitschuhs der Fig. 3 von oben,
- Fig. 9: die Seitenansicht der Fig. 4 und eine Schnittansicht entlang der Linie A-A der Fig. 9,
- Fig. 10: die Seitenansicht der Fig. 4 und eine Schnittansicht entlang der Linie B-B,
- Fig. 11: eine Draufsicht auf die Querstrebe der Positioniereinrichtung der Fig. 1 und
- Fig. 12: eine fahrbahnseitige Führungsrampe mit gebäudefestem Kupplungsteil für das Zusammenwirken mit der Positioniereinrichtung der Fig. 1.

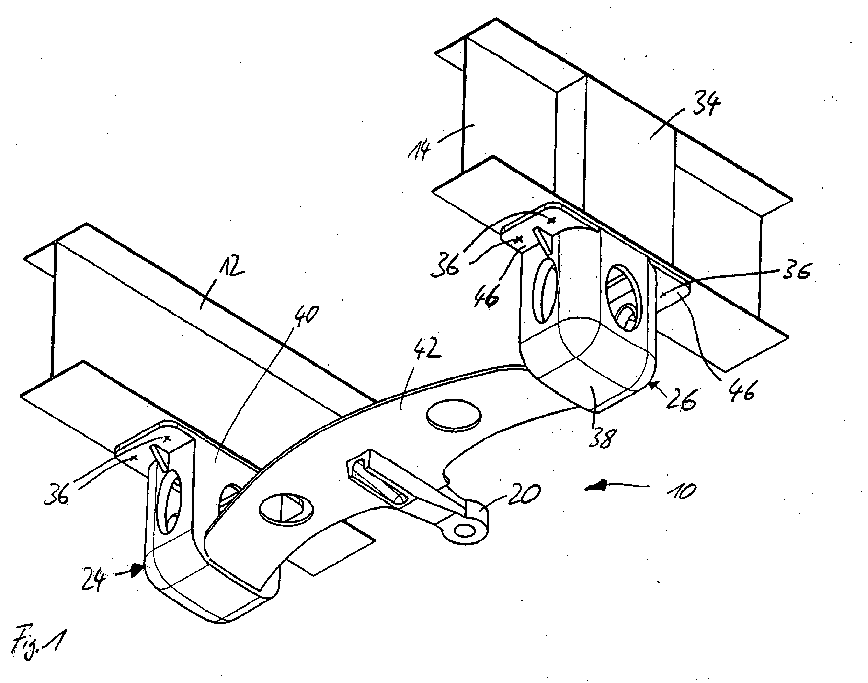

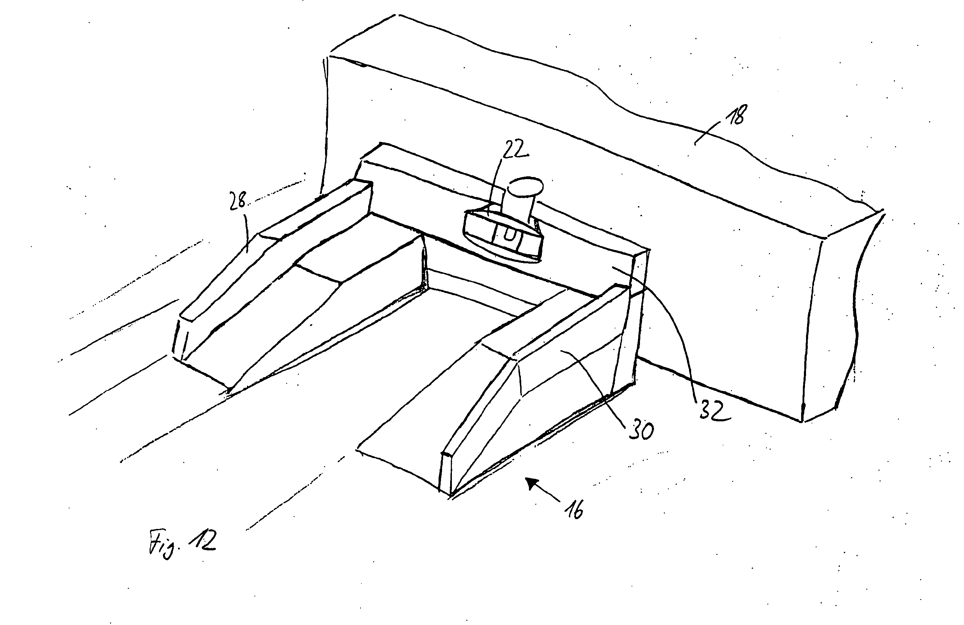

In der perspektivischen Ansicht der Fig. 1 ist eine Positioniereinrichtung 10 dargestellt, die an einem rechten Längsträger 12 und einem linken Längsträger 14 eines Nutzfahrzeugs befestigt ist. Das Nutzfahrzeug ist beispielsweise als Sattelauflieger ausgebildet und soll mittels der Positioniereinrichtung 10 und der in Fig. 12 dargestellten Führungsrampe 16 relativ zu einer ebenfalls in Fig. 12 dargestellten Laderampe 18 in Fahrzeughochrichtung und Fahrzeugquerrichtung positioniert werden. Das Nutzfahrzeug soll dabei während des Rückwärtsanfahrens der Laderampe 18 mittels der Führungsrampe 16 so positioniert werden, dass eine Ladefläche des Nutzfahrzeugs auf gleicher Höhe mit der Laderampe 18 liegt und darüber hinaus kein oder lediglich ein geringer Zwischenraum zwischen der Ladefläche und der Vorderkante der Laderampe besteht. In dieser Ladestellung soll das Nutzfahrzeug dann dadurch gehalten werden, dass eine Kupplungsöse 20 der Positioniereinrichtung 10 der Fig. 1 in ein Maulkupplungsteil 22 eingreift, das in Fig. 12 dargestellt ist und fest mit der Laderampe 18 oder den Führungsrampen 16 und somit mit der Fahrbahn verbunden ist. Mittels der Kupplung aus der Kupplungsöse 20 und dem Maulkupplungsteil 22 kann das Nutzfahrzeug dann während des Be- oder Entladevorgangs sicher an der Laderampe 18 gehalten werden und es ist insbesondere ausgeschlossen, dass durch Fehlbedienung eines Fahrers des Nutzfahrzeugs, dieses vor Beendigung des Be- oder Entladevorgangs von der Laderampe 18 entfernt wird.

Zum Positionieren des Nutzfahrzeugs beim Rückwartsanfahren der Laderampe 18 wirken Gleitschuhe 24, 26 der Positioniereinrichtung 10 mit den Führungsrampen 16 zusammen. Speziell laufen die Gleitschuhe 24, 26 auf eine rechte bzw. linke Rampe der Führungsrampen 16 auf, wodurch das Nutzfahrzeug zunächst in Fahrzeughochrichtung angehoben wird. Die Gleitschuhe 24, 26 laufen darüber hinaus an einer rechten bzw. linken Seitenwand 28, 30 der Führungsrampen 16 an, wodurch das Nutzfahrzeug dann gleichzeitig in Fahrzeugquerrichtung positioniert wird. Mit dem Erreichen der Endposition schlagen die Gleitschuhe 24, 26 an einem Querbalken 32 an, der entweder mit den Führungsrampen 16 und damit mit der Fahrbahn oder mit der Laderampe 18 und damit einem Gebäude verbunden ist. Durch das Anschlagen an diesen Querbalken 32 wird das Nutzfahrzeug in Fahrzeuglängsrichtung angehalten und korrekt zur Laderampe 18 positioniert. In dieser Stellung greift die Kupplungsöse 20 in den Maulkupplungsteil 22 ein und wird dort in bekannter Weise gesichert. Während des gesamten Ladevorgangs wird das Nutzfahrzeug dadurch in seiner korrekten Entladeposition gehalten und es kann zuverlässig verhindert werden, dass der Fahrer eines Nutzfahrzeugs vor Beendigung des Ladevorgangs versucht, das Nutzfahrzeug von der Laderampe wegzufahren.

Wie in der Darstellung der Fig. 1 zu erkennen ist, ist der Gleitschuh 24 an einer Unterseite des Längsträgers 12 befestigt und der Gleitschuh 26 ist an einer Unterseite des linken Längsträgers 14 befestigt. Zur Stabilisierung des linken Längsträgers 14 ist ein Adapterstück 34 vorgesehen, dass die Außenseite des I-förmigen Querschnitts des Längsträgers 14 oberhalb des Gleitschuhs 26 ausfüllt. Dadurch werden von dem Gleitschuh 26 auf den Längsträger 14 übertragene Kräfte gleichmäßig über dessen Querschnitt verteilt. Ein identisches Adapterstück ist oberhalb des Gleitschuhs 24 am rechten Längsträger 12 vorgesehen, in der Darstellung der Fig. 1 aber nicht zu erkennen.

Die Gleitschuhe 24, 26 sind jeweils mittels in Fig. 1 lediglich schematisch angedeuteter Schraubbolzen 36 mit dem jeweiligen Längsträger 12, 14 verbunden.

Wie in der Darstellung der Fig. 1 zu erkennen ist, sind die Gleitschuhe 24, 26 identisch ausgebildet und lediglich um 180° verdreht zueinander montiert. Die Gleitschuhe 24, 26 sind als Hohlkörper und speziell rohrartig ausgebildet und weisen eine geschlossene Stirnseite 38 auf, die als Führungs- und Auflagefläche auf den in Fig. 12 dargestellten Führungsrampen 16 dient. Eine jeweilige innere Seitenwand 40 der Gleitschuhe 24, 26 ist eben ausgebildet und weist in ihrem unteren Bereich eine Einstecköffnung auf, in die ein plattenförmiger Querträger 42 eingesteckt ist. Der plattenförmige Querträger 42 ist somit mit jeweils einem Ende in einen der Gleitschuhe 24, 26 eingesteckt und verbindet dadurch die Gleitschuhe 24, 26. An den Gleitschuhen 24, 26 angreifende Seitenführungskräfte können dadurch zum jeweils gegenüberliegenden Gleitschuh 24, 26 übertragen werden und dadurch gleichmäßig in die Längsträger 12, 14 des Nutzfahrzeugs eingeleitet werden.

Mittig zu den Gleitschuhen 24, 26 ist der Querträger 42 mit einer Kupplungsöse 20 versehen, die sich in Bezug auf das Nutzfahrzeug nach hinten erstreckt. Auch an der Kupplungsöse 20 angreifende Haltekräfte, insbesondere Zugkräfte, die dann auftreten, wenn versucht wird, das mittels der Kupplungsöse 20 und dem Maulkupplungsteil 22 blockierte Nutzfahrzeug von der Laderampe 18 wegzufahren, werden somit über den Querträger 42 in die Gleitschuhe 24, 26 und infolgedessen in beide Längsträger 12, 14 des Nutzfahrzeugs eingeleitet.

Die Positioniereinrichtung 10 ist in Leichtbauweise ausgeführt und alle Seitenwände der Gleitschuhe 24, 26 sind zur Gewichtserleichterung jeweils mit einer elliptischen Durchgangsöffnung versehen. Auch der Querträger 42 ist mit zwei Erleichterungsbohrungen 44 versehen, die darüber hinaus jeweils eine Sollbruchstelle im Querträger 42 definieren. Bevor es durch übermäßige Zug- , Schub- oder Seitenkräften an der Kupplungsöse zu einer Beschädigung der Längsträger 12, 14 kommt, verbiegt sich oder bricht der Querträger 42. Der Querträger 42 kann dann in einfacher Weise ausgewechselt werden.

Die Gleitschuhe 24, 26 weisen jeweils eine Deckplatte 46 auf, die flächig an einer Unterseite des jeweiligen Längsträgers 12, 14 anliegt und dadurch für eine gleichmäßige Krafteinleitung in die Längsträger 12, 14 sorgt.

Die Gleitschuhe 24, 26 sind als Gussteil aus hochzähem Gusswerkstoff ausgebildet. Der Querträger 42 besteht aus einer ausgelaserten Stahlplatte, an der die als Serienbauteil erhältliche Kupplungsöse 20 befestigt, beispielsweise verschweißt ist.

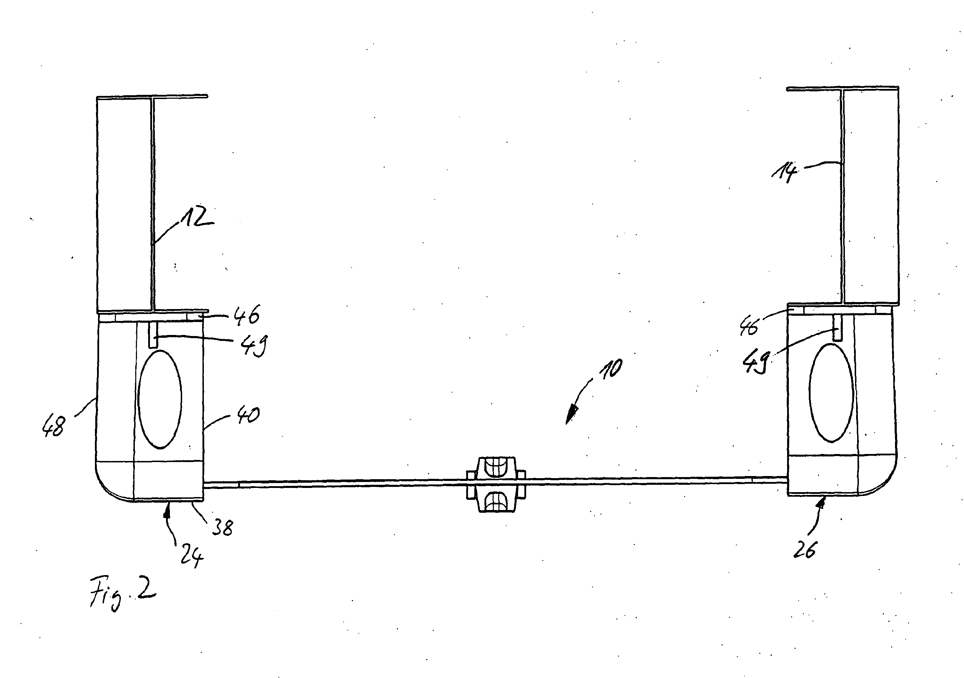

In der Vorderansicht der Positioniereinrichtung 10 der Fig. 2 ist gut zu erkennen, dass die Gleitschuhe 24, 26 jeweils flächig mit ihrer jeweiligen Deckplatte 46 an einer Unterseite der Längsträger 12, 14 anliegen. Die Deckplatte 46 ist lediglich geringfügig schmäler als die Längsträger 12, 14 ausgebildet.

Gut zu erkennen ist in Fig. 2 der abgerundete Übergang von der geschlossenen Stirnseite 38 zu einer jeweiligen äußeren Seitenwand 48 der Gleitschuhe 24, 26. Durch diese abgerundete Gestaltung des Übergangs wird ein Entlanggleiten der Gleitschuhe 24, 26 auf den Führungsrampen 16 begünstigt.

Es ist in der Darstellung der Fig. 2 zu erkennen, dass die äußere Seitenwand 48 in einem Winkel von weniger als 90° zur geschlossenen Stirnseite 38 und infolgedessen in einem Winkel von mehr als 90° zu der Deckplatte 46 angeordnet ist. Ein Querschnitt der Gleitschuhe 24, 26 erweitert sich somit geringfügig in Richtung von der Deckplatte 46 zur geschlossenen Stirnseite 38. Dadurch kann die Deckplatte 46 in Fahrzeugquerrichtung schmal und an die Breite der Längsträger 12, 14 angepasst ausgeführt werden und dennoch kann die geschlossene Stirnseite 38, die ja als Auflage- und Führungsfläche auf den Führungsrampen 16 dient, in Fahrzeugquerrichtung etwas breiter ausgebildet werden. Die nicht rechtwinklige Anordnung der Außenwand 48 zur Deckplatte 46 ist auch im Hinblick auf eine Übertragung von Querkräften in die Deckplatte 46 und die Längsträger 12, 14 vorteilhaft.

Die Deckplatte 46 ist zu einer Vorderseite der Gleitschuhe 24, 26 und auch zu einer Rückseite der Gleitschuhe 24, 26 jeweils mittels einer Versteifungsrippe 49 abgestützt. Dadurch wird eine äußerst stabile Anbindung der Deckplatte 46 an den hohlen, rohrartigen Teil der Gleitschuhe 24, 26 erreicht.

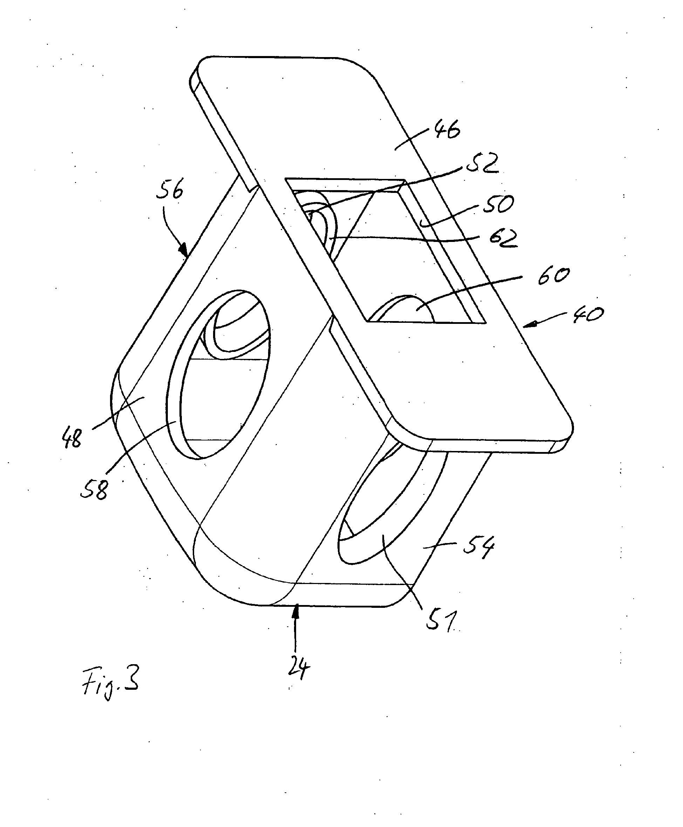

Die Darstellung der Fig. 3 zeigt den Gleitschuh 24 der Fig. 1 in vergrößerter Darstellung. Wie bereits ausgeführt wurde, sind die Gleitschuhe 24, 26 identisch und werden lediglich um 180° zueinander verdreht an den Längsträgern 12, 14 montiert.

In der Darstellung der Fig. 3 ist zu erkennen, dass die Deckplatte 46 eine mittig angeordnete, rechteckige Durchgangsöffnung 50 aufweist, die oberhalb des Innenraums des hohlen, rohrartigen Gleitschuhs 24 angeordnet ist. Die Durchgangsöffnung 50 dient hauptsächlich der Gewichtserleichterung. Ebenfalls der Gewichtserleichterung dienen die Durchgangsöffnungen 52 in einer vorderen Seitenwand 54 und einer hinteren Seitenwand 56 des Gleitschuhs 24 sowie die Durchgangsöffnung 58 in der äußeren Seitenwand 48 und die Durchgangsöffnung 60 in der inneren Seitenwand 40 des Gleitschuhs 24. Alle Durchgangsöffnungen 51, 52, 58, 60 der Seitenwände 40, 48, 54, 56 sind elliptisch ausgebildet, wobei sich eine längere Halbachse jeweils in Längsrichtung des Gleitschuhs 24 und im Einbauzustand somit in Fahrzeughochrichtung erstreckt. Die elliptische Form der Durchgangsöffnungen 51, 52, 58 und 60 erlaubt eine maximale Materialersparnis und damit Gewichtserleichterung, ohne eine Materialschwächung und dadurch lokale Spannungsmaxima im Belastungsfall zu verursachen.

Die Durchgangsöffnung 51, 52 sind jeweils mit einem sich in den Innenraum des Gleitschuhs 24 hinein erstreckenden umlaufenden Kragen 62 versehen. Mittels dieses umlaufenden Kragens 62 werden die hintere Seitenwand 56 und die vordere Seitenwand 54 wirkungsvoll versteift, so dass die extremen Blockierkräfte beim Auffahren auf die Führungsrampe 16 und beim Anschlagen des Gleitschuhs 24 an den Querbalken 32 aufgenommen und in die Längsträger 12, 14 eingeleitet werden können.

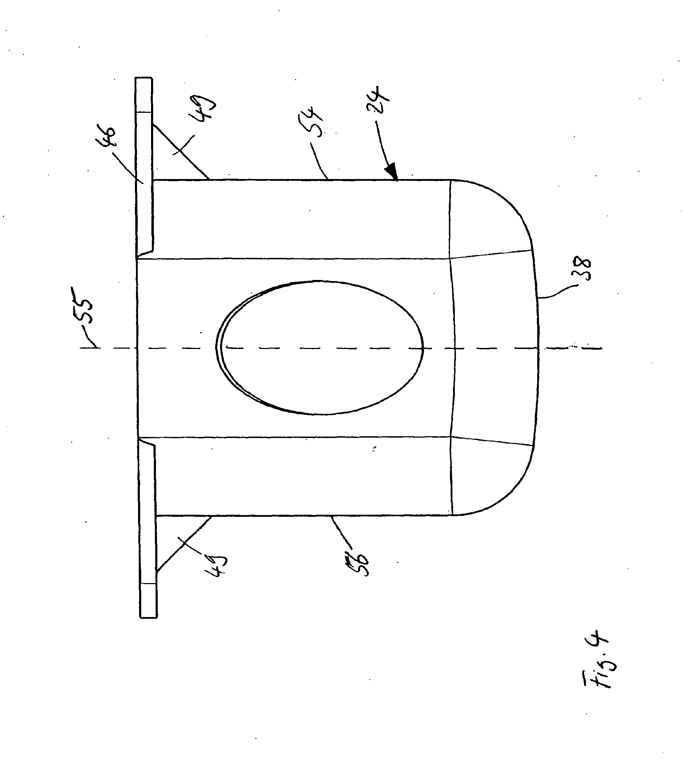

In der Seitenansicht der Fig. 4 von einer Außenseite her ist zu erkennen, dass die geschlossene Stirnseite 38 in Längsrichtung gewölbt ausgeführt ist. Dadurch wird erreicht, dass die Führungsfläche 38 unabhängig von geringen Winkeltoleranzen der Ausrichtung des Nutzfahrzeugs zu den Führungsrampen 16 immer mit einem annähernd gleichen Flächenanteil auf den Führungsrampen 16 aufliegt. Dadurch können auch die Haft- bzw. Gleitreibungskräfte zwischen Führungsfläche 38 und Führungsrampen 16 im Wesentlichen unabhängig von einer Winkelausrichtung der Gleitschuhe 24, 26 zu den Führungsrampen 16 gehalten werden. Gut zu erkennen ist auch, dass die gewölbte Führungsfläche 38 sanft gerundet in die vordere Seitenwand 54 und die hintere Seitenwand 56 übergeht. Dadurch kann ein Festhaken des Gleitschuhs 24 beim Auftreffen auf die Führungsrampen 16 zuverlässig vermieden werden. In der Darstellung der Fig. 4 ist bereits zu erkennen, dass der Gleitschuh 24 symmetrisch zu einer Mittelebene 55 ausgebildet ist. Der Gleitschuh 24 kann dadurch sowohl am rechten Längsträger 12 wie auch am linken Längsträger 14 montiert werden.

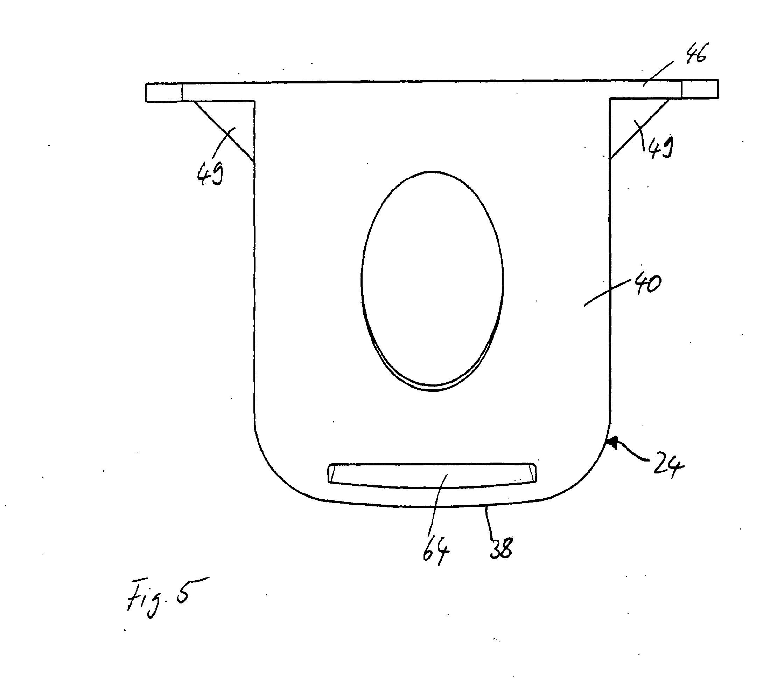

Die Seitenansicht der Fig. 5 von innen zeigt eine Einstecköffnung 64 in der inneren Seitenwand 40 des Gleitschuhs 24. Die Einstecköffnung 64 ist schlitzartig ausgebildet und erstreckt sich parallel zur Längsrichtung. Die Abmessungen der Einstecköffnung 64 sind auf die Abmessungen der jeweiligen freien Enden des Querträgers 42 abgestimmt, so dass der Querträger 42 durch einfaches Einstecken in eine jeweilige Einstecköffnung 64 der Gleitschuhe 24, 26 bereits sicher in diesen gehalten ist. Eine zusätzliche Befestigung des Querträgers 42 an den Gleitschuhen 24, 26 ist dabei nicht unbedingt erforderlich, da der Querträger 42 im montierten Zustand der Positioniereinrichtung 10 unverlierbar an den Gleitschuhen 24, 26 gehalten ist. Ein eventuell vorhandenes geringes Spiel zwischen Querträger 42 und der jeweiligen Einstecköffnung 64 kann zum Vermeiden von Klappergeräuschen beispielsweise durch Zwischenlegen elastischer Schichten oder geeignete Vorspannmittel vermieden werden.

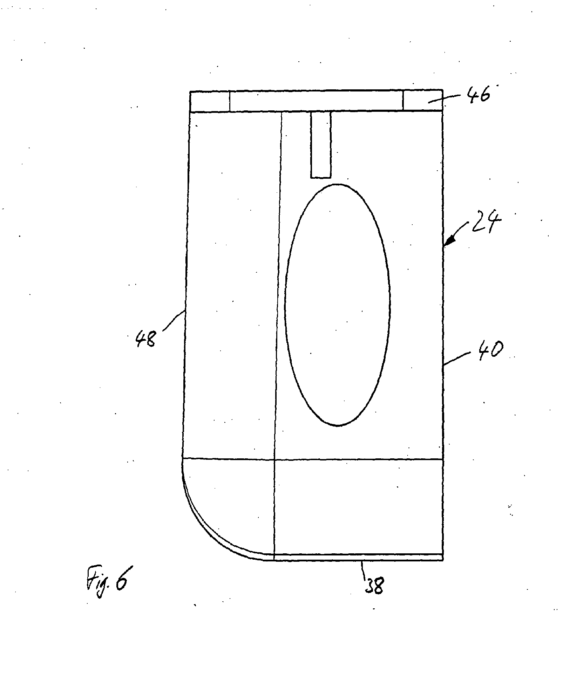

Die Vorderansicht des Gleitschuhs 24 der Fig. 6 lässt erkennen, dass die Führungsfläche 38 in Querrichtung eben ausgebildet ist. Dadurch wird eine annähernd rechteckförmige Auflagefläche des Gleitschuhs 24 auf den Führungsrampen 16 erreicht und speziell werden punktuelle Belastungen, die zu einer Überbelastung der Führungsrampen 16 oder gar zu einem Festhaken des Gleitschuhs 24 führen könnten, zuverlässig vermieden. In der Darstellung der Fig. 6 ist weiterhin der sanft abgerundete Übergang von der geschlossenen Stirnseite mit der Führungsfläche 38 in die äußere Seitenwand 48 zu erkennen. Weiterhin ist zu erkennen, wie bereits erwähnt wurde, dass die äußere Seitenwand 48 nicht rechtwinklig zur Deckplatte 46 angeordnet ist, sondern sich der Querschnitt des Gleitschuhs 24 ausgehend von der Deckplatte 46 in Richtung auf die geschlossene Stirnseite zu geringfügig erweitert, da die äußere Seitenwand 48 in einem Winkel von wenig mehr als 90° zur Deckplatte 46 angeordnet ist.

Im Unterschied hierzu ist die innere Seitenwand 40 eben ausgebildet und sowohl zur Deckplatte 46 als auch zur Führungsfläche 38 in einem Winkel von 90° angeordnet.

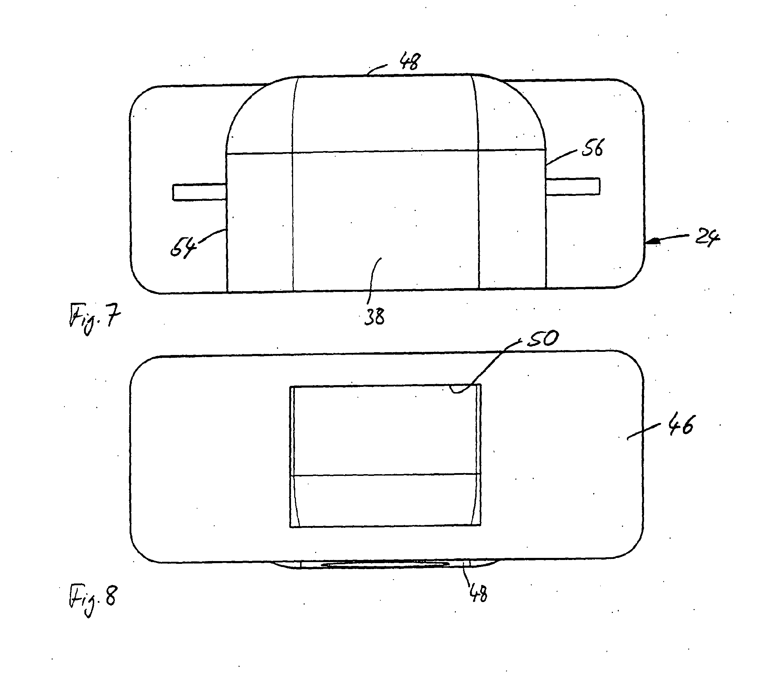

Die Ansicht der Fig. 7 des Gleitschuhs 24 von unten zeigt die abgerundete Ausbildung der Kanten am Übergang der vorderen Seitenwand 54 zur äußeren Seitenwand 48 und am Übergang der äußeren Seitenwand 48 zur hinteren Seitenwand 56. Zusammen mit der bereits beschriebenen abgerundeten Ausbildung des Übergangs der Führungsfläche 38 zu den Seitenwänden 48, 54, 56 entsteht somit eine zu drei Seiten des Gleitschuhs 24 hin abgerundete Ausgestaltung des auf den Führungsrampen 16 aufliegenden Bereichs des Gleitschuhs 24.

In der Draufsicht der Fig. 8 ist die Deckplatte 46 mit ihrer rechteckigen Durchgangsöffnung 50 zu erkennen und weiterhin ist zu erkennen, wie bereits beschrieben wurde, dass die äußere Seitenwand 48 in einem Winkel von geringfügig mehr als 90° zur Deckplatte 46 angeordnet ist.

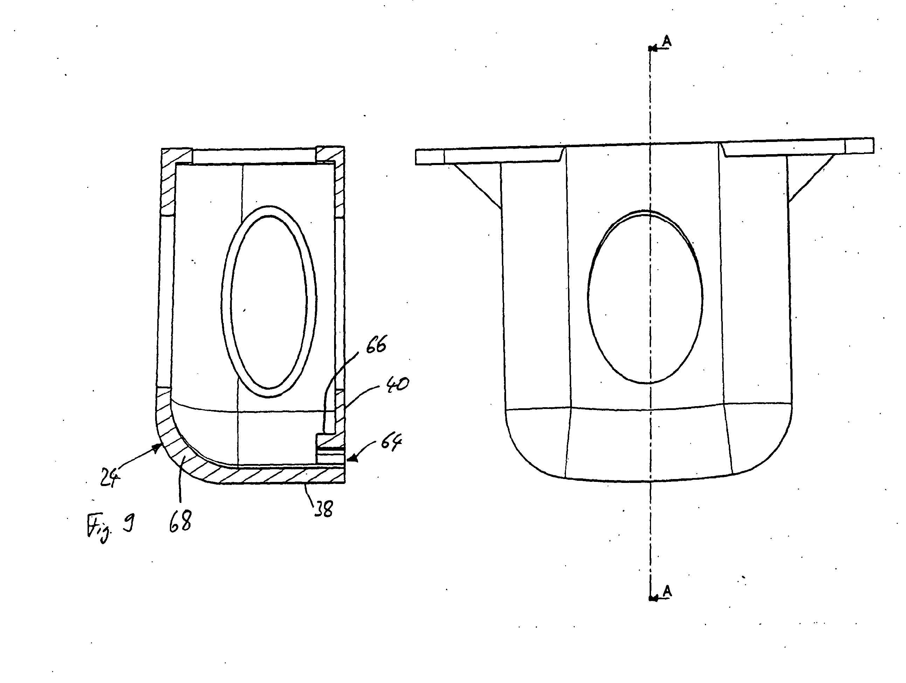

Die Darstellung der Fig. 9 zeigt in dem Schnitt A-A die Ausbildung der Einstecköffnung 64 in der inneren Seitenwand 40 des Gleitschuhs 24. Die Einstecköffnung 64 schließt unmittelbar an die Innenseite der geschlossenen Stirnseite an, so dass der Querträger 42 nach dem Einschieben in die Einstecköffnung 64 auf dem Boden des Gleitschuhs 24 aufliegt. Zur inneren Seitenwand 40 hin ist die Einstecköffnung 64 mittels eines Kragens 66 umgeben, der die Einstecköffnung 64 an drei Seiten umgibt und sich von der inneren Seitenwand 40 aus in den Innenraum des Gleitschuhs 24 hinein erstreckt. Mittels des Kragens 66 wird somit die Anlagefläche des Querträgers 42 an der inneren Seitenwand 40 vergrößert und auf diese Weise können Kräfte vom Gleitschuhe 24 auf den Querträger 42 und umgekehrt über eine größere Fläche in den Gleitschuhe 24 eingeleitet werden, so dass lokale Spannungsmaxima zuverlässig vermieden werden.

Unter Heranziehung der Fig. 5 und 9 ist zu erkennen, dass eine untere Begrenzung der Einstecköffnung 64 in Längsrichtung leicht gewölbt ausgebildet ist und der Wölbung der Führungsfläche 38 in Längsrichtung folgt.

Die Schnittansicht der Fig. 9 zeigt weiterhin, dass am Übergang der geschlossenen Stirnseite mit der Führungsfläche 38 zur äußeren Seitenwand 48 in dem gekrümmten Übergangsbereich 68 eine erhöhte Wandstärke des Gleitschuhs 24 vorgesehen ist. Die besonders belasteten Bereiche des Gleitschuhs 24 an den gekrümmten Übergängen der Führungsfläche 38 in die jeweiligen Seitenwände werden dadurch verstärkt.

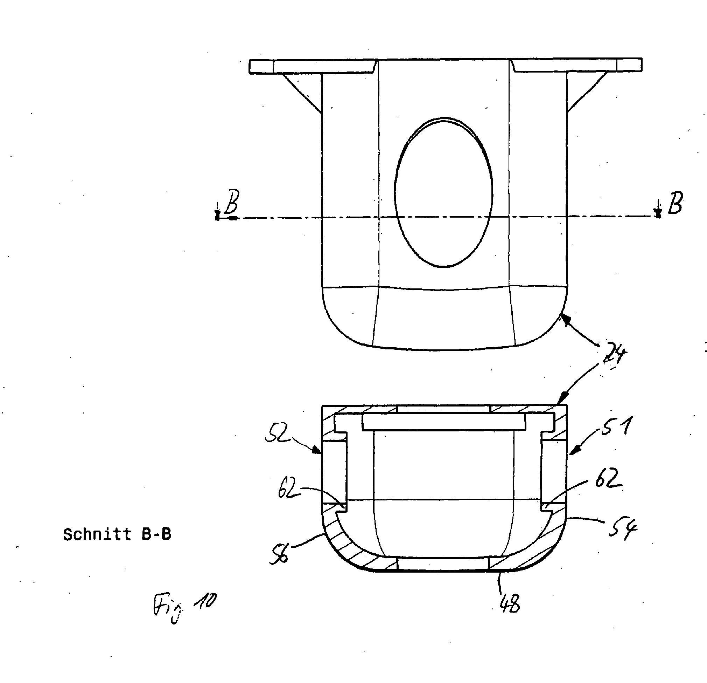

In Fig. 10 ist in dem Schnitt B-B die Ausbildung der sich nach innen erstreckenden umlaufenden Kragen 62 der Durchgangsöffnungen 51 und 52 zu erkennen. Die Kragen 62 erstrecken sich in Richtung auf den Innenraum des Gleitschuhs 24 zu und versteifen dadurch die vordere Seitenwand 54 und die hintere Seitenwand 56. Auch in dem Schnitt B-B ist zu erkennen, dass die Übergänge von den Seitenwänden 54, 56 zur äußeren Seitenwand 48 im gekrümmten Bereich mit erhöhter Materialstärke ausgeführt sind.

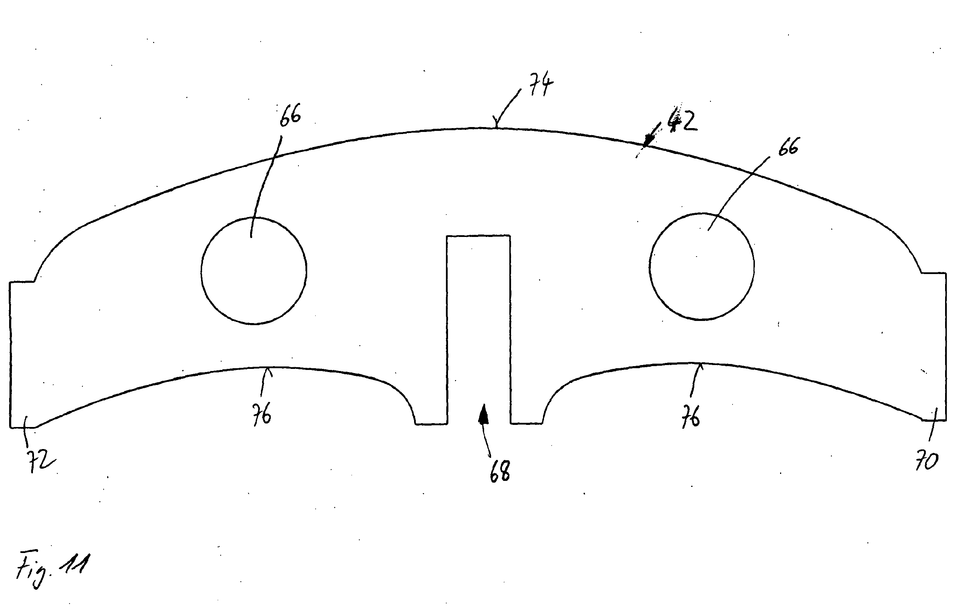

Fig. 11 zeigt den Querträger 42, wobei allerdings die Kupplungsöse 20 der Fig. 1 nicht am Querträger 42 angeordnet ist. Der Querträger 42 ist aus einer Stahlplatte ausgeschnitten, beispielsweise ausgelasert, und weist zwei Erleichterungsbohrungen 66 mit jeweils kreisförmigem Querschnitt auf, die in geringer belasteten Bereichen angeordnet sind. Zur Aufnahme der Kupplungsöse 20 ist der Querträger 42 mit einer rechteckigen Ausnehmung 68 versehen, in die die Kupplungsöse 20 eingeschoben und dann beispielsweise mit dem Querträger 42 verschweißt wird. Die Kupplungsöse 20 oder die Verbindung der Kupplungsöse zum Querträger 42 kann als Sollbruchstelle ausgebildet sein. Es ist aber auch möglich, die Sollbruchstelle im Querträger 42 selbst auszubilden. Ein rechtes Ende 70 und ein linkes Ende 72 des Querträgers 42 ist jeweils als rechteckförmiger Vorsprung 70, 72 ausgebildet. Diese in der Draufsicht rechteckförmigen und letztendlich quaderförmigen Vorsprünge 70, 72 werden vollständig in eine jeweilige Einstecköffnung 64 der Gleitschuhe 24, 26 eingeschoben und werden bereits dadurch sicher und unverlierbar an den Gleitschuhen 24, 26 gehalten. Zusätzliche Befestigungseinrichtungen zur Fixierung der Vorsprünge 70, 72 in den jeweiligen Gleitschuh 24, 26 können vorgesehen werden, beispielsweise das Vorsehen geeigneter Rasteinrichtungen für das werkzeuglose Anbringen des Querträgers 42 an den Gleitschuhen 24, 26.

Eine in Vorwärtsrichtung eines Nutzfahrzeugs gesehen vordere Kante 74 des Querträgers 42 ist in Vorwärtsfahrtrichtung gekrümmt ausgeführt. Der Querträger 42 dient ja zur Aufnahme von Zugkräften, die an der Zugöse 20 angreifen, wenn versucht wird, das Nutzfahrzeug vor Beendigung eines Be- oder Entladevorgangs von der Laderampe 18 wegzufahren. Solche Zugkräfte wirken demnach entgegen der Vorwärtsfahrtrichtung und durch die in Fig. 11 dargestellte gekrümmte Ausbildung der Vorderkante 74 führen solche Zugkräfte an der Kupplungsöse 20 zu jeweils zur Mitte gerichteten Druckkräften im Bereich der Vorderkante 74. Die Zugkräfte können durch den Querträger 42 dadurch gut aufgenommen werden und speziell ist der Querträger 42, trotz seiner Ausbildung als vergleichsweise dünne Platte 42, sehr gut für eine im Wesentlichen verformungsfreie Aufnahme solcher Zugkräfte geeignet.

Rechts und links der Ausnehmung 68 für die Zugöse 20 ist die Hinterkante 76 des Querträgers 42 ebenfalls in Vorwärtsfahrtrichtung gekrümmt ausgeführt. Diese nach vorne gekrümmte Ausbildung, in Bezug auf den Querträger 42, also nach innen gekrümmt, ermöglicht eine gute Zugänglichkeit der Zugöse 20 und schafft den beim Anfahren der Laderampe 18 gegebenenfalls erforderlichen Platz neben der Zugöse 20 für den maulartigen Kupplungsteil 22.

## Patentansprüche

1. Gleitschuh für Positioniereinrichtung für Nutzfahrzeuge, wobei der Gleitschuh (24, 26) für ein Zusammenwirken mit wenigstens einer fahrbahnseitigen Führungsrampe (16) zum Positionieren des Nutzfahrzeugs wenigstens in Fahrzeugquerrichtung und/oder Fahrzeughochrichtung ausgebildet ist, **dadurch gekennzeichnet, dass** der Gleitschuh (24, 26) eine hohle, insbesondere rohrartige Form mit wenigstens einer geschlossenen Stirnseite aufweist, wobei die geschlossene Stirnseite wenigstens abschnittsweise eine mit der fahrbahnseitigen Führungsrampe (16) zusammenwirkende Führungsfläche (38) bildet.

2. Gleitschuh für Nutzfahrzeuge nach Anspruch 1, **dadurch gekennzeichnet, dass** der rohrartige Gleitschuh (24, 26) eine im Querschnitt rechteckartige Form aufweist.

3. Gleitschuh nach Anspruch 1 oder 2, **dadurch gekennzeichnet, dass** wenigstens eine im wesentlichen senkrecht zur geschlossenen Stirnseite angeordnete Seitenwand (40, 48, 54, 56) des rohrartigen Gleitschuhs (24, 26) mit wenigstens einer Durchgangsöffnung (51, 52) versehen ist.

4. Gleitschuh nach Anspruch 3, **dadurch gekennzeichnet, dass** die Durchgangsöffnung (51, 52) eine ovale oder elliptische Form aufweist.

5. Gleitschuh nach Anspruch 3 oder 4, **dadurch gekennzeichnet, dass** eine Berandung der Durchgangsöffnung (51, 52) mit einem im wesentlichen senkrecht zur jeweiligen Seitenwand (54, 56) angeordneten umlaufenden Kragen (62) versehen ist.

6. Gleitschuh nach wenigstens einem der vorstehenden Ansprüche, **gekennzeichnet durch** eine Ausbildung als Gußteil aus zähem Gußwerkstoff.

7. Gleitschuh nach Anspruch 6, **dadurch gekennzeichnet, dass** das Gußteil wenigstens im Bereich der Führungsfläche (38) zur Erzielung besserer Gleiteigenschaften nachbehandelt, insbesondere verdichtet ist.

8. Positioniereinrichtung für Nutzfahrzeuge mit wenigstens zwei Gleitschuhen (24, 26) nach einem der vorstehenden Ansprüche, **gekennzeichnet durch** einen die beiden Gleitschuhe verbindenden Querträger (42).

9. Positioniereinrichtung nach Anspruch 8, **dadurch gekennzeichnet, dass** der Querträger (42) mit wenigstens einem fahrzeugseitigen Kupplungsteil (20) zum Eingreifen in einen fahrbahn- oder gebäudeseitigen zweiten Kupplungsteil (22) einer Blockiervorrichtung versehen ist.

10. Positioniereinrichtung nach Anspruch 9, **dadurch gekennzeichnet, dass** eine dem ersten Kupplungsteil (20) gegenüberliegende Kante (74) des plattenartigen Querträgers (42) nach außen, in Vorwärtsfahrtrichtung des Nutzfahrzeugs, gekrümmt ist.

11. Positioniereinrichtung nach einem der Ansprüche 8 bis 10, **dadurch gekennzeichnet, dass** der Querträger (42) wenigstens eine Sollbruchstelle aufweist.

## Claims

1. Slide shoe for positioning unit for commercial vehicles, the slide shoe (24, 26) being designed for interaction with at least one road-side guide ramp (16) for positioning the commercial vehicle at least in the transverse direction and/or the vertical direction of the vehicle, **characterized in that** the slide shoe (24, 26) has a hollow and in particular tube-like form with at least one closed end, said closed end forming at least in some sections a guide surface (38) interacting with the road-side guide ramp (16).

2. Slide shoe for commercial vehicles according to Claim 1, **characterized in that** the tube-like slide shoe (24, 26) has a rectangular form in its cross-section.

3. Slide shoe according to Claim 1 or Claim 2, **characterized in that** at least one side wall (40, 48, 54, 56) of the tube-like slide shoe (24, 26) arranged substantially vertical to the closed end is provided with at least one passage opening (51, 52).

4. Slide shoe according to Claim 3, **characterized in that** the passage opening (51, 52) has an oval or elliptical form.

5. Slide shoe according to Claim 3 or Claim 4, **characterized in that** a rim of the passage opening (51, 52) is provided with an all-round collar (62) arranged substantially vertical to the respective side wall (53, 56).

6. Slide shoe according to at least one of the preceding claims, **characterized by** a design as a casting of a tough casting material.

7. Slide shoe according to Claim 6, **characterized in that** the casting is after-treated, in particular compacted, at least in the area of the guide surface (38) to achieve better sliding properties.

8. Positioning unit for commercial vehicles having at least two slide shoes (24, 26) in accordance with one of the preceding claims, **characterized by** a cross-member (42) connecting the two shoes.

9. Positioning unit according to Claim 8, **characterized in that** the cross-member (42) is provided with at least one vehicle-side coupling part (20) for engaging in a road-side or building-side second coupling part (22) of a blocking unit.

10. Positioning unit according to Claim 9, **characterized in that** an edge (74) of the plate-like cross-member (42) opposite the first coupling part (20) is curved outwards in the forward movement direction of the commercial vehicle.

11. Positioning unit according to one of Claims 8 to 10, **characterized in that** the cross-member (42) has at least one predetermined breaking point.

## Revendications

1. Patin de guidage pour dispositif de positionnement pour véhicules utilitaires, sachant que le patin de guidage (24, 26) est conçu pour fonctionner en interaction avec au moins une rampe de guidage (16) située du côté de la chaussée pour le positionnement du véhicule utilitaire au moins dans le sens transversal du véhicule et/ou dans le sens de la hauteur du véhicule, **caractérisé en ce que** le patin de guidage (24, 26) présente une forme creuse, en particulier de type tubulaire avec au moins une face frontale fermée, sachant que la face frontale fermée forme au moins en partie une surface de guidage (38) fonctionnant en interaction avec la rampe de guidage (16) située du côté de la chaussée.

2. Patin de guidage pour véhicules utilitaires selon la revendication 1, **caractérisé en ce que** le patin de guidage de type tubulaire (24, 26) présente en coupe transversale une forme de type rectangulaire.

3. Patin de guidage selon la revendication 1 ou 2, **caractérisé en ce qu'**au moins une paroi latérale (40, 48, 54, 56) du patin de guidage de type tubulaire (24, 26), disposée essentiellement à la verticale par rapport à la face frontale fermée, est pourvue d'au moins un orifice de passage (51, 52).

4. Patin de guidage selon la revendication 3, **caractérisé en ce que** l'orifice de passage (51, 52) présente une forme ovale ou elliptique.

5. Patin de guidage selon la revendication 3 ou 4, **caractérisé en ce qu'**un bord de l'orifice de passage (51, 52) est pourvu sur toute la circonférence d'un collet (62) disposé essentiellement à la verticale par rapport à la paroi latérale (54, 56) respective.

6. Patin de guidage selon au moins l'une des revendications précédentes, **caractérisé par** une conception sous forme de pièce moulée en matériau de moulage dur.

7. Patin de guidage selon la revendication 6, **caractérisé en ce que** la pièce moulée est post-traitée, en particulier comprimée, au moins dans la zone de la surface de guidage (38) afin d'obtenir de meilleures caractéristiques de glissement.

8. Dispositif de positionnement pour véhicules utilitaires avec au moins deux patins de guidage (24, 26) selon l'une des revendications précédentes, **caractérisé par** une traverse (42) reliant les deux patins de guidage.

9. Dispositif de positionnement selon la revendication 8, **caractérisé en ce que** la traverse (42) est pourvue d'au moins un élément d'accouplement (20) du côté du véhicule destiné à s'engager dans un second élément d'accouplement (22) d'un dispositif de blocage, situé du côté de la chaussée ou du bâtiment.

10. Dispositif de positionnement selon la revendication 9, **caractérisé en ce qu'**un bord (74) de la traverse (42) en forme de plaque, opposé au premier élément d'accouplement (20), est courbé vers l'extérieur, dans le sens de la marche avant du véhicule utilitaire.

11. Dispositif de positionnement selon l'une des revendications 8 à 10, **caractérisé en ce que** la traverse (42) présente au moins un point destiné à la rupture.
